# EUROPÄISCHE PATENTANMELDUNG

(11) **EP 2 977 554 A1**
(43) Veröffentlichungstag der Anmeldung: **27.01.2016**
(21) Anmeldenummer: 15176213.5
(22) Anmeldetag: 10.07.2015
(51) Int. Cl.: F01D 5/16, F01D 5/22

(54) **VERSTIMMTE TURBOMASCHINENSCHAUFELN**

(30) Priorität: 22.07.2014 DE 102014214271
(71) Anmelder: MTU Aero Engines AG, 80995 München (DE)
(72) Erfinder: Stiehler, Frank, 04924 Bad Liebenwerda (DE); Pernleitner, Martin, 85221 Dachau (DE); Hartung, Andreas, 81829 München (DE)

(57) **Zusammenfassung**

Die vorliegende Erfindung betrifft eine Turbomaschinenschaufel (100; 200) mit einem Grundkörper, der ein Schaufelblatt (1) zur Strömungsumlenkung und einen Schaufelfuß (2) aufweist, einer ersten grundkörperfesten Führung (110; 210), in der ein erster Körper (111; 211) beweglich geführt ist, und einer zweiten grundkörperfesten Führung (120; 220), in der ein zweiter Körper (121; 221) beweglich geführt ist, wobei eine Dynamik des ersten Körpers in der ersten Führung und eine Dynamik des zweiten Körpers in der zweiten Führung unterschiedlich ausgelegt sind und die erste Führung (110; 210) in einer schaufelfußnäheren Hälfte einer radialen Höhe (H) des Grundkörpers und die zweite Führung in einer schaufelfußferneren Hälfte der radialen Höhe des Grundkörpers angeordnet ist.

## Beschreibung

Die Arbeiten, die zu dieser Erfindung geführt haben, wurden gemäß der *Finanzhil-fevereinbarung* Nr. CSJU-GAM-SAGE-2008-001 im Zuge des Siebten Rahmenprogramms der Europäischen Union **(*FP7*/*2007-2013*)** für Clean Sky Joint Technology Initiative gefördert.

Die vorliegende Erfindung betrifft eine Turbomaschinenschaufel mit einem Grundkörper, der ein Schaufelblatt zur Strömungsumlenkung und einen Schaufelfuß aufweist, einer ersten grundkörperfesten Führung, in der ein erster Körper beweglich geführt ist, und einer zweiten grundkörperfesten Führung, in der ein zweiter Körper beweglich geführt ist, eine Turbomaschinenschaufelanordnung mit wenigstens zwei solchen Turbomaschinenschaufeln, eine Gasturbine mit wenigstens einer solchen Turbomaschinenschaufel, insbesondere wenigstens einer solchen Turbomaschinenschaufelanordnung, sowie ein Verfahren zum Auslegen einer solchen Turbomaschinenschaufel bzw. Turbomaschinenschaufelanordnung.

Aus der WO 2012/095067 A1 ist eine Turbomaschinenschaufel mit einer Stimmkörperführung bekannt, in der ein Stimmkörper, der zum Stoßkontakt vorgesehen ist, beweglich geführt ist. Wie in dieser WO 2012/095067 A1 erläutert, kann hierdurch vorteilhaft eine Eigenfrequenz der Schaufel verstimmt werden, indem der Stimmkörper unter bestimmten Betriebsbedingungen beginnt, Stöße auszuführen.

Um für unterschiedliche Resonanzfrequenzen und/oder Anregungen die Folgen von Schwingungsanregungen zu reduzieren, schlägt diese WO 2012/095067 A1 vor, mehrere Stimmkörperführungen und/oder die durch diese beweglich geführten Stimmkörper unterschiedlich auszubilden. Dabei sieht diese WO 2012/095067 A1 eine fußnahe Anordnung als besonders vorteilhaft an.

Eine Aufgabe einer Ausführung der vorliegenden Erfindung ist es, eine verbesserte Turbomaschine zur Verfügung zu stellen.

Diese Aufgabe wird durch eine Turbomaschinenschaufel mit den Merkmalen des Anspruchs 1 gelöst. Die Ansprüche 9 bis 12 stellen eine Turbomaschinenschaufelanordnung mit solchen Turbomaschinenschaufeln, eine Gasturbine mit solchen Turbomaschinenschaufeln bzw. Turbomaschinenschaufelanordnungen, bzw. ein Verfahren zum Auslegen einer solchen Turbomaschinenschaufel bzw. Turbomaschinenschaufelanordnung unter Schutz. Vorteilhafte Ausführungsformen der Erfindung sind Gegenstand der Unteransprüche.

Nach einem Aspekt der vorliegenden Erfindung weist eine Turbomaschinenschaufel einen Grundkörper mit einem Schaufelblatt zur Strömungsumlenkung und einen Schaufelfuß auf. Der Grundkörper kann ein- oder mehrteilig ausgebildet, insbesondere urgeformt, vorzugsweise gegossen, oder spanend hergestellt sein bzw. werden. Der Schaufelfuß kann lösbar, insbesondere form- und/oder reibschlüssig, oder dauerhaft, insbesondere stoffschlüssig, mit einem Rotor oder Gehäuse einer Turbomaschine, insbesondere Gasturbine, verbunden, insbesondere integral damit ausgebildet sein bzw. werden.

Die Turbomaschinenschaufel weist eine erste grundkörperfeste Führung, in der ein erster Körper beweglich geführt ist, und eine zweite grundkörperfeste Führung, in der ein zweiter Körper beweglich geführt ist, auf. Die erste und/oder zweite Führung kann jeweils, insbesondere vollständig oder teilweise, integral mit, insbesondere an, vorzugsweise in, dem Grundkörper ausgebildet werden bzw. sein. In einer Ausführung wird bzw. ist die erste und/oder zweite Führung jeweils, insbesondere vollständig oder teilweise, separat ausgebildet und an dem Grundkörper lösbar oder dauerhaft, insbesondere stoffschlüssig, befestigt.

Eine Dynamik des ersten Körpers in der ersten Führung und eine Dynamik des zweiten Körpers in der zweiten Führung sind bzw. werden unterschiedlich ausgelegt. Hierdurch können vorteilhaft insbesondere multiharmonische Anregungen berücksichtigt werden. So kann beispielweise eine Maschinenordnung unterschiedliche Moden, etwa eine erste Biege- und eine erste Torsionseigenfrequenz, kreuzen. Indem die Dynamik des einen Körpers in seiner Führung auf eine Maschinenordnung und/oder Mode und die Dynamik des anderen Körpers in seiner Führung auf eine andere Maschinenordnung und/oder Mode abgestimmt wird bzw. ist, kann eine Schwingungsantwort der Turbomaschinenschaufel auf eine solche multiharmonische Anregung verbessert, insbesondere reduziert werden.

Nach einem Aspekt der vorliegenden Erfindung ist bzw. wird die erste Führung in einer schaufelfußnäheren Hälfte, insbesondere in einem schaufelfußnächsten Drittel, vorzugsweise schaufelfußnächsten Viertel, einer radialen Höhe des Grundkörpers und die zweite Führung in einer schaufelfußferneren Hälfte, insbesondere in einem schaufelfußfernsten Drittel, vorzugsweise schaufelfußfernsten Viertel, der radialen Höhe des Grundkörpers angeordnet.

Hierdurch kann in einer Ausführung in vorteilhafter Weise die Dynamik des ersten Körpers in der ersten Führung auf eine Eigenform abgestimmt werden bzw. sein, die insbesondere in einem schaufelfußnahen Bereich große Amplituden aufweist und dort entsprechend stark beeinflussbar ist, während die Dynamik des zweiten Körpers in der zweiten Führung auf eine andere Eigenform abgestimmt werden bzw. sein kann, die insbesondere in einem schaufelfußfernen Bereich große Amplituden aufweist und dort entsprechend stark beeinflussbar ist. Mit anderen Worten können durch die Anordnung der ersten Führung und die radial gegenüberliegende Anordnung der zweiten Führung gleichzeitig jeweils optimale Orte für die Beeinflussung der Schwingungsantwort unterschiedlicher Moden und/oder Maschinenordnungen genutzt werden.

Zusätzlich oder alternativ kann in einer Ausführung in vorteilhafter Weise die gegenüberliegende Anordnung der ersten und zweiten Führung dazu genutzt werden, eine Fliehkraftbeanspruchung zu reduzieren, indem beispielsweise der zweite, schaufelfußfernere Körper leichter ausgelegt wird bzw. ist, sein Bewegungsspiel geringer oder dergleichen.

Eine radiale Höhe des Grundkörpers ist in einer Ausführung definiert durch die maximale Abmessung des Grundkörpers in radialer Richtung der Turbomaschine zwischen einem radial innersten bzw. drehachsennächsten Oberflächenpunkt des Grundkörpers und einem radial äußersten bzw. drehachsenfernsten Oberflächenpunkt des Grundkörpers. Ist die Turbomaschinenschaufel eine separat ausgebildete und lösbar oder dauerhaft mit dem Rotor verbindbare, insbesondere verbundene, Laufschaufel, so ist die radiale Höhe ihres Grundkörpers die radiale Abmessung von einer radial inneren Stirnseite ihres Schaufelfußes zu einer radial äußeren Oberfläche einer Schaufelspitze des deckbandlosen Schaufelblattes oder einer radial äußeren Oberfläche eines Außendeckbandes des Schaufelblattes, insbesondere einer radial außen angeordneten Dichtfinne auf dem Außendeckband. Entsprechend ist die radiale Höhe des Grundkörpers einer separat ausgebildeten und lösbar oder dauerhaft mit dem Gehäuse verbindbaren, insbesondere verbundenen Leitschaufel die radiale Abmessung von einer radial äußeren Stirnseite ihres Schaufelfußes zu einer radial inneren Oberfläche einer Schaufelspitze des deckbandlosen Schaufelblattes oder einer radial inneren Oberfläche eines Deckbandes des Schaufelblattes, insbesondere einer radial innen angeordneten Dichtfinne auf dem Deckband. Ist die Turbomaschinenschaufel eine integral mit dem Rotor ausgebildete Laufschaufel, so ist die radiale Höhe ihres Grundkörpers die radiale Abmessung von einer radial inneren Mantelfläche des Rotors zu einer radial äußeren Oberfläche einer Schaufelspitze des deckbandlosen Schaufelblattes oder einer radial äußeren Oberfläche eines Außendeckbandes des Schaufelblattes, insbesondere einer radial außen angeordneten Dichtfinne auf dem Außendeckband. Ist die Turbomaschinenschaufel eine integral mit dem Gehäuse ausgebildete Leitschaufel, so ist die radiale Höhe ihres Grundkörpers die radiale Abmessung von einer radial äußeren Mantelfläche eines Gaskanals des Gehäuses zu einer radial inneren Oberfläche einer Schaufelspitze des deckbandlosen Schaufelblattes oder einer radial inneren Oberfläche eines Deckbandes des Schaufelblattes, insbesondere einer radial innen angeordneten Dichtfinne auf dem Deckband.

In einer Ausführung ist bzw. wird die erste Führung an einem dem Schaufelblatt radial benachbarten Deckband angeordnet, insbesondere einem radial inneren bzw. Innendeckband. Zusätzlich oder alternativ ist bzw. wird die erste Führung auf einer schaufelblattabgewandten Seite des dem Schaufelblatt radial benachbarten Deckbands angeordnet, insbesondere auf einer radial inneren Seite eines Innendeckbandes. Zusätzlich oder alternativ ist bzw. wird in einer Ausführung die zweite Führung an einem dem Schaufelblatt radial benachbarten Deckband angeordnet, insbesondere einen radial äußeren bzw. Außendeckband. Zusätzlich oder alternativ ist bzw. wird die zweite Führung auf einer schaufelblattabgewandten Seite des dem Schaufelblatt radial benachbarten Deckbands angeordnet, insbesondere auf einer radial äußeren Seite eines Außendeckbandes.

Innen- bzw. Außendeckbänder stellen einen vorteilhaften Platz, insbesondere großen Bauraum und/oder eine besonders schaufelfußnahe bzw. -ferne Stelle, für die erste bzw. zweite Führung zur Verfügung.

Die Dynamik des ersten Körpers in der ersten Führung und die Dynamik des zweiten Körpers in der zweiten Führung können in verschiedener Weise unterschiedlich ausgelegt werden bzw. sein.

Insbesondere kann in einer Ausführung eine Hauptbewegungsrichtung der zweiten Führung, in welcher der zweite Körper maximales Spiel aufweist, mit einer Hauptbewegungsrichtung der ersten Führung, in welcher der erste Körper maximales Spiel aufweist, einen Winkel bilden, der wenigstens 15°, insbesondere wenigstens 30°, beträgt. Hierdurch können beispielsweise Hauptstoßrichtungen von Stimmkörpern, die zum Stoßkontakt mit ihrer Führung vorgesehen sind, oder auch Hauptreibrichtungen von Dämpfungskörpern, die zur dissipativen Bewegung in ihrer Führung vorgesehen sind, jeweils optimal für unterschiedliche Eigenformen orientiert werden bzw. sein.

Die Hauptbewegungsrichtung der zweiten Führung kann in einer Ausführung mit einer von der radialen, axialen oder Umfangsrichtung einen Winkel bilden, der höchstens 30°, insbesondere höchstens 10°, beträgt. Entsprechend kann die Hauptbewegungsrichtung der ersten Führung in einer Weiterbildung mit einer anderen von der radialen, axialen oder Umfangsrichtung einen Winkel bilden, der höchstens 30°, insbesondere höchstens 10°, beträgt. So kann beispielsweise die Hauptbewegungslichtung der zweiten Führung im Wesentlichen in Umfangsrichtung, die Hauptbewegungsrichtung der ersten Führung im Wesentlichen in Axialrichtung ausgerichtet sein, so dass beide miteinander einen Winkel von etwa 90° bilden.

Zusätzlich oder alternativ zu einer unterschiedlichen Orientierung einer Hauptbewegungsrichtung können die Dynamik des ersten Körpers in der ersten Führung und die Dynamik des zweiten Körpers in der zweiten Führung dadurch unterschiedlich ausgelegt werden bzw. sein, dass die Körper unterschiedliche maximale Spiele und damit entsprechend unterschiedliche Beschleunigungswege zum Stoßen oder Reibwege aufweisen.

Entsprechend beträgt in einer Ausführung ein maximales Spiel des einen Körpers in seiner Führung wenigstens das 1,1fach insbesondere wenigstens das 1,5fache, eines maximalen Spiels des anderen Körpers in dessen Führung. Entsprechend beträgt in einer Ausführung ein maximales Spiel des ersten Körpers in der ersten Führung wenigstens das 1,1fach insbesondere wenigstens das 1,5fache, eines maximalen Spiels des zweiten Körpers in der zweiten Führung. In einer anderen Ausführung beträgt umgekehrt ein maximales Spiel des zweiten Körpers in der zweiten Führung wenigstens das 1,1fach insbesondere wenigstens das 1,5fache, eines maximalen Spiels des ersten Körpers in der ersten Führung.

Gleichermaßen können erster Körper und erste Führung sowie zweiter Körper und zweite Führung auch geometrisch ähnlich, insbesondere mit dem gleichen Bewegungsspiel, ausgelegt werden bzw. sein, insbesondere, um ihre Herstellung zu vereinfachen, wenn ihre Dynamik beispielsweise durch unterschiedliche Hauptbewegungsrichtungen, unterschiedliche Massen oder dergleichen unterschiedlich ausgelegt werden bzw. sind. Entsprechend weicht in einer Ausführung ein maximales Spiel des ersten Körpers in der ersten Führung von einem maximalen Spiel des zweiten Körpers in der zweiten Führung um höchstens 10%, insbesondere höchstens 1%, ab.

Zusätzlich oder alternativ zu einer unterschiedlichen Orientierung einer Hauptbewegungsrichtung und/oder unterschiedlichem maximalen Spiel können die Dynamik des ersten Körpers in der ersten Führung und die Dynamik des zweiten Körpers in der zweiten Führung dadurch unterschiedlich ausgelegt werden bzw. sein, dass die Körper unterschiedliche Massen und damit entsprechend unterschiedliche Impulse zum Stoßen oder Reibkräfte aufweisen.

Entsprechend weicht in einer Ausführung eine Masse des ersten Körpers von einer Masse des zweiten Körpers um wenigstens 10% ab. In einer Weiterbildung ist der erste, schaufelfußnähere Körper schwerer, insbesondere um eine Fliehkraftbelastung einer rotierenden Laufschaufel zu reduzieren. In einer anderen Weiterbildung ist der zweite, schaufelfußfernere Körper schwerer, insbesondere um eine höhere Anregung einer rotierenden Laufschaufel zu erreichen.

Gleichermaßen können erster Körper und zweiter Körper auch ähnlich ausgelegt werden bzw. sein, insbesondere, um ihre Herstellung zu vereinfachen, wenn ihre Dynamik beispielsweise durch unterschiedliche Hauptbewegungsrichtungen, unterschiedliche maximale Spiele oder dergleichen unterschiedlich ausgelegt werden bzw. sind. Entsprechend weicht in einer Ausführung eine Masse des ersten Körpers von einer Masse des zweiten Körpers um höchstens 10%, insbesondere höchstens 1%, ab.

Zusätzlich oder alternativ zu einer unterschiedlichen Orientierung einer Hauptbewegungsrichtung, unterschiedlichem maximalen Spiel und/oder unterschiedlichen Massen können die Dynamik des ersten Körpers in der ersten Führung und die Dynamik des zweiten Körpers in der zweiten Führung dadurch unterschiedlich ausgelegt werden bzw. sein, dass die Körper unterschiedliche Abmessungen und/oder Haftreibungskoeffizienten und damit entsprechend unterschiedliche Kontaktgeometrien zum Stoßen oder Reibverhältnisse aufweisen.

Entsprechend weisen in einer Ausführung der erste und zweite Körper und/oder die erste und zweite Führung eine maximale Abmessung auf, die um wenigstens 10% voneinander abweichen. Eine maximale Abmessung ist beispielsweise der Durchmesser eines kugelförmigen Körpers, eine Diagonale eines würfelförmigen Körpers, eine Tiefe eines zylindrischen Langlochs und dergleichen.

Zusätzlich oder alternativ weisen in einer Ausführung der erste Körper und die erste Führung miteinander einen ersten Haftreibungskoeffizienten und der zweite Körper und die zweite Führung miteinander einen zweiten Haftreibungskoeffizienten auf, wobei der erste und zweite Haftreibungskoeffizient um wenigstens 10% voneinander abweichen.

Gleichermaßen können die Körper und/oder Führungen auch mit ähnlichen Abmessungen und/oder Haftreibungskoeffizienten ausgelegt werden bzw. sein, insbesondere, um ihre Herstellung zu vereinfachen, wenn ihre Dynamik beispielsweise durch unterschiedliche Hauptbewegungsrichtungen, unterschiedliche Massen, unterschiedliche maximale Spiele oder dergleichen unterschiedlich ausgelegt werden bzw. sind. Entsprechend weicht in einer Ausführung eine maximale Abmessung des ersten Körpers von einer maximale Abmessung des zweiten Körpers um höchstens 10%, insbesondere höchstens 1%, ab. Zusätzlich oder alternativ weichen in einer Ausführung der erste und zweite Haftreibungskoeffizient um höchstens 10%, insbesondere höchstens 1%, voneinander ab.

In einer Ausführung weisen der erste und zweite Körper eine unterschiedliche geometrische Form bzw. Kontur auf. So kann beispielsweise einer der Körper kugelförmig, der andere der Körper zylinderförmig ausgebildet sein.

Der erste und zweite Körper können jeweils Stimmkörper sein, die zum Stoßkontakt mit ihrer Führung vorgesehen sind, wie dies insbesondere in der eingangs erläuterten WO 2012/095067 A1 beschrieben ist. Gleichermaßen können der erste und zweite Körper jeweils Dämpfungskörper sein, die zum dissipativen Reibkontakt mit ihrer Führung vorgesehen sind. In einer anderen Ausführung ist der erste Körper ein Stimmkörper, der zum Stoßkontakt mit seiner ersten Führung vorgesehen ist, der zweite Körper ein Dämpfungskörper, der zum dissipativen Reibkontakt mit seiner zweiten Führung vorgesehen ist, oder umgekehrt der erste Körper ein Dämpfungskörper, der zum dissipativen Reibkontakt mit seiner ersten Führung vorgesehen ist, der zweite Körper ein Stimmkörper, der zum Stoßkontakt mit seiner zweiten Führung vorgesehen ist.

Insbesondere hierzu beträgt in einer Ausführung ein maximales Spiel des ersten und/oder zweiten Körpers in seiner Führung wenigstens das Dreifache eines Spiels dieses Körpers in einer oder mehreren, insbesondere allen, Richtungen, die zu einer Hauptbewegungsrichtung, in der dieser Körper dieses maximale Spiel aufweist, senkrecht sind. Insbesondere kann also der erste und/oder zweite Körper in seiner Führung einen makroskopischen Bewegungsfreiheitsgrad in der Hauptbewegungsrichtung aufweisen, während er in den anderen Richtungen vorzugsweise eine Spielpassung aufweist, um eine Bewegung in dem Bewegungsfreiheitsgrad zu ermöglichen und zu führen.

In einer anderen Ausführung weicht ein maximales Spiel des ersten und/oder zweiten Körpers in seiner Führung von einem Spiel dieses Körpers in einer oder mehreren, insbesondere allen, Richtungen, die zu einer Hauptbewegungsrichtung, in der der Körper dieses maximale Spiel aufweist, senkrecht sind, um höchstens 10% ab. Insbesondere kann also der erste und/oder zweite Körper in seiner Führung drei translatorische Bewegungsfreiheitsgrade aufweisen.

Nach einem Aspekt der vorliegenden Erfindung weist eine Turbomaschinenschaufelanordnung eine erste der hier beschriebenen Turbomaschinenschaufeln sowie eine, insbesondere in Umfangsrichtung benachbarte, zweite der hier beschriebenen Turbomaschinenschaufeln auf. In einer Ausführung sind bzw. werden die Dynamik des ersten Körpers in der ersten Führung der ersten Turbomaschinenschaufel und die Dynamik des ersten Körpers in der ersten Führung der zweiten Turbomaschinenschaufel in der hier beschriebenen Weise unterschiedlich ausgelegt. Zusätzlich oder alternativ sind bzw. werden die Dynamik des zweiten Körpers in der zweiten Führung der ersten Turbomaschinenschaufel und die Dynamik des zweiten Körpers in der zweiten Führung der zweiten Turbomaschinenschaufel in der hier beschriebenen Weise unterschiedlich ausgelegt.

Hierdurch kann in einer Ausführung vorteilhaft eine besonders wirkungsvolle Verstimmung der Schaufeln untereinander dargestellt werden. Zusätzlich oder alternativ kann hierdurch in einer Ausführung die Schwingungsantwort der Turbomaschinenschaufelanordnung auf eine mehrfach multiharmonische Anregung verbessert, insbesondere reduziert werden.

Insbesondere können die erste und/oder zweite Führung der ersten und/oder zweiten Turbomaschinenschaufel der Turbomaschinenschaufelanordnung jeweils an einem dem Schaufelblatt radial benachbarten Deckband und/oder auf einer schaufelblattabgewandten Seite eines dem Schaufelblatt radial benachbarten Deckbands angeordnet sein bzw. werden.

Zusätzlich oder alternativ kann eine Hauptbewegungsrichtung der ersten Führung der ersten Schaufel, in welcher der erste Körper der ersten Schaufel maximales Spiel aufweist, mit einer Hauptbewegungsrichtung der ersten Führung der zweiten Schaufel, in welcher der erste Körper der zweiten Schaufel maximales Spiel aufweist, einen Winkel bilden, der wenigstens 15°, insbesondere wenigstens 30°, beträgt. Zusätzlich oder alternativ kann eine Hauptbewegungsrichtung der zweiten Führung der ersten Schaufel, in welcher der zweite Körper der ersten Schaufel maximales Spiel aufweist, mit einer Hauptbewegungsrichtung der zweiten Führung der zweiten Schaufel, in welcher der zweite Körper der zweiten Schaufel maximales Spiel aufweist, einen Winkel bilden, der wenigstens 15°, insbesondere wenigstens 30°, beträgt.

Zusätzlich oder alternativ kann ein maximales Spiel des ersten Körpers in der ersten Führung der ersten Schaufel wenigstens das 1,1fach insbesondere wenigstens das 1,5fache, eines maximalen Spiels des ersten Körpers in der ersten Führung der zweiten Schaufel und/oder ein maximales Spiel des zweiten Körpers in der zweiten Führung der ersten Schaufel wenigstens das 1,1fach insbesondere wenigstens das 1,5fache, eines maximalen Spiels des zweiten Körpers in der zweiten Führung der zweiten Schaufel betragen.

Zusätzlich oder alternativ kann eine Masse des ersten Körpers der ersten Schaufel von einer Masse des ersten Körpers der zweiten Schaufel und/oder eine Masse des zweiten Körpers der ersten Schaufel von einer Masse des zweiten Körpers der zweiten Schaufel um wenigstens 10% abweichen.

Zusätzlich oder alternativ können der erste Körper und/oder die erste Führung der ersten Schaufel eine maximale Abmessung und/oder einen Haftreibungskoeffizienten aufweisen, die bzw. der um wenigstens 10% von einer maximalen Abmessung bzw. einem Haftreibungskoeffizienten des ersten Körpers und/oder der ersten Führung der zweiten Schaufel abweicht. Zusätzlich oder alternativ können der zweite Körper und/oder die zweite Führung der ersten Schaufel eine maximale Abmessung und/oder einen Haftreibungskoeffizienten aufweisen, die bzw. der um wenigstens 10% von einer maximalen Abmessung bzw. einem Haftreibungskoeffizienten des zweiten Körpers und/oder der zweiten Führung der zweiten Schaufel abweicht.

Zusätzlich oder alternativ können der erste Körper der ersten Schaufel und der erste Körper der zweiten Schaufel eine unterschiedliche geometrische Form bzw. Kontur aufweisen. Zusätzlich oder alternativ können der zweite Körper der ersten Schaufel und der zweite Körper der zweiten Schaufel eine unterschiedliche geometrische Form bzw. Kontur aufweisen.

Zusätzlich oder alternativ kann ein maximales Spiel des ersten und/oder zweiten Körpers der ersten und/oder zweiten Schaufel in seiner Führung jeweils wenigstens das Dreifache eines Spiel dieses Körpers in wenigstens einer Richtung betragen, die zu einer Hauptbewegungsrichtung, in der der Körper dieses maximale Spiel aufweist, senkrecht ist, oder von einem Spiel dieses Körpers in wenigstens einer Richtung, die zu einer Hauptbewegungsrichtung, in der der Körper dieses maximale Spiel aufweist, senkrecht ist, um höchstens 10% abweichen.

Nach einem Aspekt der vorliegenden Erfindung ist eine hier beschriebene Turbomaschinenschaufel, insbesondere eine hier beschriebene Turbomaschinenschaufelanordnung, eine Lauf- oder Leitschaufel(anordnung) eines Lauf- oder Leitgitters einer Verdichter- oder Turbinenstufe einer Gasturbine, insbesondere eines Flugtriebwerks.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

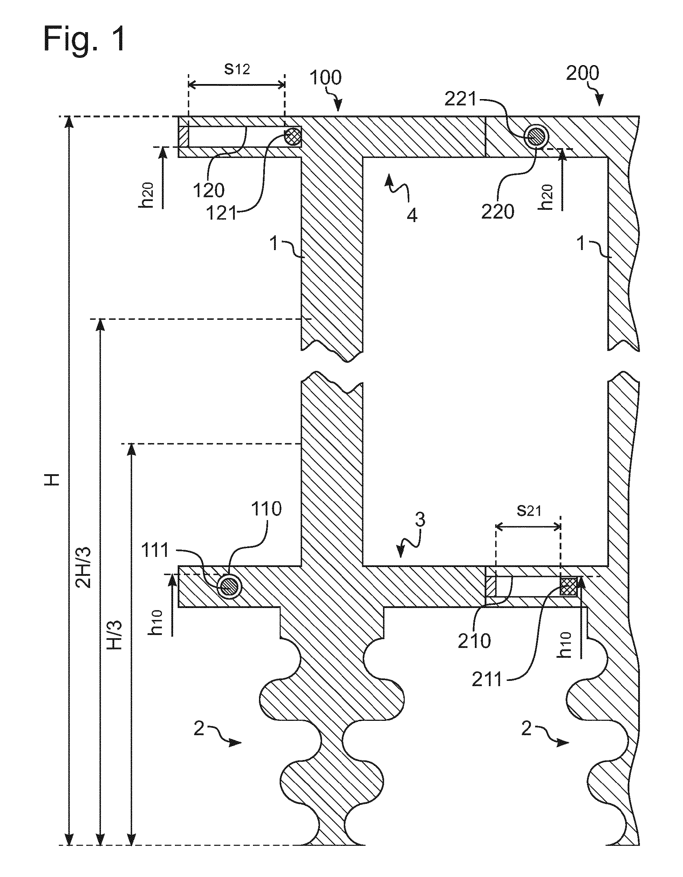

- Fig. 1: zwei Turbomaschinenschaufeln einer Turbomaschinenschaufelanordnung einer Gasturbine nach einer Ausführung der vorliegenden Erfindung.

Fig. 1 zeigt eine erste Turbomaschinenschaufel 100 und (teilweise) eine in Umfangsrichtung (horizontal in Fig. 1) benachbarte zweite Turbomaschinenschaufel 200 einer Turbomaschinenschaufelanordnung einer Gasturbine nach einer Ausführung der vorliegenden Erfindung in einem Schnitt senkrecht zu einer Drehachse der Gasturbine.

Die Turbomaschinenschaufeln 100, 200 weisen jeweils einen Grundkörper mit einem Schaufelblatt 1 zur Strömungsumlenkung und einem Schaufelfuß 2 auf.

Die erste Turbomaschinenschaufel 100 weist eine erste grundkörperfeste Führung in Form einer durch einen Deckel verschlossenen, zylinderförmigen Sacklochbohrung 110, in der ein kugelförmiger erster Körper 111 beweglich geführt ist, und eine zweite grundkörperfeste Führung in Form einer durch einen Deckel verschlossenen, zylinderförmigen Sacklochbohrung 120, in der ein kugelförmiger zweiter Körper 121 beweglich geführt ist, auf.

Die zweite Turbomaschinenschaufel 200 weist in ähnlicher Weise eine erste grundkörperfeste Führung in Form einer durch einen Deckel verschlossenen, zylinderförmigen Sacklochbohrung 210, in der ein zylinderförmiger erster Körper 211 beweglich geführt ist, und eine zweite grundkörperfeste Führung in Form einer durch einen Deckel verschlossenen, zylinderförmigen Sacklochbohrung 220, in der ein zylinderförmiger zweiter Körper 221 beweglich geführt ist, auf.

Eine Dynamik des ersten Körpers 111 in der ersten Führung 110 der ersten Schaufel 100 und eine Dynamik des zweiten Körpers 121 in der zweiten Führung 120 der ersten Schaufel 100 sind unterschiedlich ausgelegt. Auch eine Dynamik des ersten Körpers 211 in der ersten Führung 210 der zweiten Schaufel 200 und eine Dynamik des zweiten Körpers 221 in der zweiten Führung 220 der zweiten Schaufel 200 sind unterschiedlich ausgelegt. Zudem sind die Dynamik des ersten Körpers 111 in der ersten Führung 110 der ersten Schaufel 100 und die Dynamik des ersten Körpers 211 in der ersten Führung 210 der zweiten Schaufel 200 unterschiedlich ausgelegt. Auch die Dynamik des zweiten Körpers 121 in der zweiten Führung 120 der ersten Schaufel 100 und die Dynamik des zweiten Körpers 221 in der zweiten Führung 220 der zweiten Schaufel 200 unterschiedlich ausgelegt.

Die erste Führung 110 bzw. 210 ist jeweils in einem schaufelfußnächsten Drittel einer radialen Höhe H des Grundkörpers angeordnet (h₁₀ ≤ H/3), die zweite Führung 120 bzw. 220 jeweils in einem schaufelfußfernsten Drittel (2H/3 ≤ h₂₀).

Die erste Führung 110 bzw. 210 ist jeweils an einem dem Schaufelblatt 1 radial benachbarten Innendeckband 3 auf einer schaufelblattabgewandten bzw. radial inneren Seite (unten in Fig. 1) dieses Deckbands angeordnet. Die zweite Führung 120 bzw. 220 ist jeweils an einem dem Schaufelblatt 1 radial benachbarten Außendeckband 4 auf einer schaufelblattabgewandten bzw. radial äußeren Seite (oben in Fig. 1) des Außendeckbandes angeordnet.

Im Ausführungsbeispiel ist exemplarisch eine Hauptbewegungsrichtung der zweiten Führung 120 der ersten Schaufel 100, in welcher der zweite Körper 121 maximales Spiel s₁₂ aufweist, in Umfangsrichtung (horizontal in Fig. 1) ausgerichtet. Eine Hauptbewegungsrichtung der ersten Führung 110 der ersten Schaufel 100, in welcher der erste Körper 111 maximales Spiel aufweist, ist hingegen in Axialrichtung (senkrecht auf der Zeichenebene der Fig. 1) ausgerichtet.

Umgekehrt ist im Ausführungsbeispiel exemplarisch eine Hauptbewegungsrichtung der zweiten Führung 220 der zweiten Schaufel 200, in welcher der zweite Körper 221 maximales Spiel aufweist, in Axialrichtung ausgerichtet, eine Hauptbewegungsrichtung der ersten Führung 210 der zweiten Schaufel 200, in welcher der erste Körper 211 maximales Spiel s₂₁ aufweist, hingegen in Umfangsrichtung.

Damit bilden die Hauptbewegungsrichtung der ersten und zweiten Führung 110, 120 der ersten Schaufel 100 miteinander einen Winkel von etwa 90°, die Hauptbewegungsrichtung der ersten und zweiten Führung 110, 120 der zweiten Schaufel 200 miteinander ebenfalls einen Winkel von etwa 90°.

Zusätzlich bilden die Hauptbewegungsrichtung der ersten Führung 110 der ersten Schaufel 100, in welcher der erste Körper 111 der ersten Schaufel maximales Spiel aufweist, mit der Hauptbewegungsrichtung der ersten Führung 210 der zweiten Schaufel 200, in welcher der erste Körper 211 der zweiten Schaufel 200 maximales Spiel s₂₁ aufweist, sowie die Hauptbewegungsrichtung der zweiten Führung 120 der ersten Schaufel 100, in welcher der zweite Körper 121 der ersten Schaufel 100 maximales Spiel s₁₂ aufweist, mit der Hauptbewegungsrichtung der zweiten Führung 220 der zweiten Schaufel 200, in welcher der zweite Körper 221 der zweiten Schaufel 200 maximales Spiel aufweist, jeweils einen Winkel von etwa 90°.

Das maximale Spiel des ersten Körpers 111 in der ersten Führung 110 der ersten Schaufel 100 beträgt wenigstens das 1,5fache des maximalen Spiels s₁₂ des zweiten Körpers 121 in der zweiten Führung 120 der ersten Schaufel 100 und wenigstens das 1,5fache des maximalen Spiels s₂₁ des ersten Körpers 211 in der ersten Führung 210 der zweiten Schaufel 200, wie im Schnitt der Fig. 1 für die ersten Führungen 110, 210 angedeutet.

Die Masse des ersten Körpers 111 der ersten Schaufel 100 beträgt wenigstens das 1,5fache der Masse des zweiten Körpers 121 der ersten Schaufel 100 sowie wenigstens das 1,5fache der Masse des ersten Körpers 211 der zweiten Schaufel 200.

Der erste Körper 111 der ersten Schaufel 100 weist einen Durchmesser auf, der wenigstens das 1,5fache des Durchmessers des zweiten Körpers 121 der ersten Schaufel 100 sowie wenigstens das 1,5fache des Durchmessers des ersten Körpers 211 der zweiten Schaufel 200 beträgt.

Zudem beträgt der Haftreibungskoeffizient des ersten Körpers 111 in der ersten Führung 110 der ersten Schaufel 100 wenigstens das 1,5fache des Haftreibungskoeffizienten des zweiten Körpers 121 in der zweiten Führung 120 der ersten Schaufel 100 sowie wenigstens das 1,5fache des Haftreibungskoeffizienten des ersten Körpers 211 in der ersten Führung 210 der der zweiten Schaufel 200.

Das maximale Spiel der ersten und zweiten Körper 111, 121,211 und 221 in ihrer jeweiligen Führung 110, 120, 210 bzw. 220 beträgt jeweils wenigstens das Dreifache eines Spiels dieses Körpers in den Richtungen, die zu der Hauptbewegungsrichtung, in der dieser Körper dieses maximale Spiel aufweist, senkrecht sind.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Schaufelblatt
- 2: Schaufelfuß
- 3: Innendeckband
- 4: Außendeckband
- 100: erste Schaufel
- 110: erste Führung der ersten Schaufel
- 111: erster Körper der ersten Schaufel
- 120: zweite Führung der ersten Schaufel
- 121: zweiter Körper der ersten Schaufel
- 200: zweite Schaufel
- 210: erste Führung der zweiten Schaufel
- 211: erster Körper der zweiten Schaufel
- 220: zweite Führung der zweiten Schaufel
- 221: zweiter Körper der zweiten Schaufel

- H: radiale Höhe der Schaufel
- s₁₂: maximales Spiel in der zweiten Führung der ersten Schaufel
- s₂₁: maximales Spiel in der ersten Führung der zweiten Schaufel

## Patentansprüche

1. Turbomaschinenschaufel (100; 200) mit:
einem Grundkörper, der ein Schaufelblatt (1) zur Strömungsumlenkung und einen Schaufelfuß (2) aufweist;
einer ersten grundkörperfesten Führung (110; 210), in der ein erster Körper (111; 211) beweglich geführt ist; und
einer zweiten grundkörperfesten Führung (120; 220), in der ein zweiter Körper (121; 221) beweglich geführt ist;
wobei eine Dynamik des ersten Körpers in der ersten Führung und eine Dynamik des zweiten Körpers in der zweiten Führung unterschiedlich ausgelegt sind;
**dadurch gekennzeichnet, dass**
die erste Führung (110; 210) in einer schaufelfußnäheren Hälfte einer radialen Höhe (H) des Grundkörpers und die zweite Führung in einer schaufelfußferneren Hälfte der radialen Höhe des Grundkörpers angeordnet ist.

2. Turbomaschinenschaufel nach Anspruch 1, **dadurch gekennzeichnet, dass** die erste und/oder zweite Führung an einem dem Schaufelblatt radial benachbarten Deckband (3; 4) und/oder auf einer schaufelblattabgewandten Seite eines dem Schaufelblatt radial benachbarten Deckbands (3; 4) angeordnet ist.

3. Turbomaschinenschaufel nach einem der vorhergehenden Ansprüche, **dadurch gekennzeichnet, dass** eine Hauptbewegungsrichtung der zweiten Führung, in welcher der zweite Körper maximales Spiel (s₁₂) aufweist, mit der radialen, axialen oder Umfangsrichtung einen Winkel bildet, der höchstens 30°, insbesondere höchstens 10°, beträgt, und/oder mit einer Hauptbewegungsrichtung der ersten Führung, in welcher der erste Körper maximales Spiel (s₂₁) aufweist, einen Winkel bildet, der wenigstens 15°, insbesondere wenigstens 30°, beträgt.

4. Turbomaschinenschaufel nach einem der vorhergehenden Ansprüche, **dadurch gekennzeichnet, dass** ein maximales Spiel (s₁₂) des einen Körpers (121) in seiner Führung (120) wenigstens das 1,1fach insbesondere wenigstens das 1,5fache, eines maximalen Spiels (s₂₁) des anderen Körpers (211) in dessen Führung (210) beträgt oder von einem maximalen Spiel (s₂₁) des anderen Körpers (211) in dessen Führung (210) um höchstens 10%, insbesondere höchstens 1%, abweicht.

5. Turbomaschinenschaufel nach einem der vorhergehenden Ansprüche, **dadurch gekennzeichnet, dass** eine Masse des ersten Körpers von einer Masse des zweiten Körpers um wenigstens oder höchstens 10% abweicht.

6. Turbomaschinenschaufel nach einem der vorhergehenden Ansprüche, **dadurch gekennzeichnet, dass** der erste und zweite Körper und/oder die erste und zweite Führung eine maximale Abmessung und/oder einen Haftreibungskoeffizienten aufweisen, die um wenigstens oder höchstens 10% voneinander abweichen.

7. Turbomaschinenschaufel nach einem der vorhergehenden Ansprüche, **dadurch gekennzeichnet, dass** der erste und zweite Körper eine unterschiedliche Form aufweisen.

8. Turbomaschinenschaufel nach einem der vorhergehenden Ansprüche, **dadurch gekennzeichnet, dass** ein maximales Spiel (s₁₂; s₂₁) eines Körpers (121; 211) in seiner Führung (120; 210) wenigstens das Dreifache eines Spiel dieses Körpers in wenigstens einer Richtung beträgt, die zu einer Hauptbewegungsrichtung, in der der Körper dieses maximale Spiel aufweist, senkrecht ist, oder von einem Spiel dieses Körpers in wenigstens einer Richtung, die zu einer Hauptbewegungsrichtung, in der der Körper dieses maximale Spiel aufweist, senkrecht ist, um höchstens 10% abweicht.

9. Turbomaschinenschaufelanordnung mit einer ersten Turbomaschinenschaufel (100) nach einem der vorhergehenden Ansprüche und einer, insbesondere in Umfangsrichtung benachbarten, zweiten Turbomaschinenschaufel (200) nach einem der vorhergehenden Ansprüche, **dadurch gekennzeichnet, dass** die Dynamik des ersten Körpers (111) in der ersten Führung (110) der ersten Turbomaschinenschaufel (100) und die Dynamik des ersten Körpers (211) in der ersten Führung (210) der zweiten Turbomaschinenschaufel (200) und/oder die Dynamik des zweiten Körpers (121) in der zweiten Führung (120) der ersten Turbomaschinenschaufel (100) und die Dynamik des zweiten Körpers (221) in der zweiten Führung (220) der zweiten Turbomaschinenschaufel (200) unterschiedlich ausgelegt sind.

10. Gasturbine, insbesondere Flugtriebwerk, mit wenigstens einer Verdichter- oder Turbinenstufe mit wenigstens einem Lauf- oder Leitgitter mit wenigstens einer Turbomaschinenschaufel (100; 200), insbesondere Turbomaschinenschaufelanordnung (100, 200), nach einem der vorhergehenden Ansprüche.

11. Verfahren zum Auslegen einer Turbomaschinenschaufel (100; 200) nach einem der vorhergehenden Ansprüche, **dadurch gekennzeichnet, dass** die Dynamik des ersten Körpers (111; 211) in der ersten Führung (110; 210) und die Dynamik des zweiten Körpers (121; 221) in der zweiten Führung (120; 220) unterschiedlich ausgelegt werden.

12. Verfahren zum Auslegen einer Turbomaschinenschaufelanordnung nach Anspruch 9, **dadurch gekennzeichnet, dass** die Dynamik des ersten Körpers (111) in der ersten Führung (110) der ersten Turbomaschinenschaufel (100) und die Dynamik des ersten Körpers (211) in der ersten Führung (210) der zweiten Turbomaschinenschaufel (200) und/oder die Dynamik des zweiten Körpers (121) in der zweiten Führung (120) der ersten Turbomaschinenschaufel (100) und die Dynamik des zweiten Körpers (221) in der zweiten Führung (220) der zweiten Turbomaschinenschaufel (200) unterschiedlich ausgelegt werden.
